# EUROPÄISCHE PATENTSCHRIFT

(11) **EP 1 255 965 B1**
(45) Veröffentlichungstag und Bekanntmachung des Hinweises auf die Patenterteilung: **28.01.2004**
(21) Anmeldenummer: 01909751.8
(22) Anmeldetag: 14.02.2001
(51) Int. Cl.: G01D 5/347

(54) **CODESCHEIBE FÜR EINE OPTOELEKTRONISCHE WEG- ODER WINKELMESSEINRICHTUNG**
CODED DISC FOR AN OPTOELECTRONIC DISPLACEMENT OR ANGLE MEASURING DEVICE
DISQUE CODE POUR UNE UNITE OPTOELECTRONIQUE SERVANT A MESURER UN DEPLACEMENT OU UN ANGLE

(30) Priorität: 15.02.2000 DE 10006675
(43) Veröffentlichungstag der Anmeldung: 13.11.2002
(73) Patentinhaber: Leopold Kostal GmbH & Co. KG, 58507 Lüdenscheid (DE)
(72) Erfinder: BLÄSING, Frank, 59457 Werl (DE); BÖBEL, Ralf, 44269 Dortmund (DE)
(74) Vertreter: Haverkamp, Jens
(86) Internationale Anmeldenummer: PCT/EP2001/001642
(87) Internationale Veröffentlichungsnummer: WO 2001/061280

(56) Entgegenhaltungen:
- EP-A- 0 263 888
- EP-A- 0 276 402
- WO-A-92/04600
- WO-A-92/04776
- US-A- 5 214 426
- PATENT ABSTRACTS OF JAPAN vol. 9, no. 236 (P-390) [1959], 21. September 1985 (1985-09-21) & JP 60 089709 A (MITISUBISHI DENKI K.K.), 20. Mai 1985 (1985-05-20)

## Beschreibung

Die Erfindung betrifft eine optoelektronische Weg- oder Winkelmeßeinrichtung, bestehend aus einer Codescheibe und einer zu dieser ortsfest angeordneten photosensitiven Sensoreinrichtung mit einer Vielzahl nebeneinander in Querrichtung zur Längserstreckung der Codierung angeordneter photoelektrischer Wandlerelemente und einer Beleuchtungseinrichtung zum optischen Abbilden der Codierung der Codescheibe auf der photosensitiven Oberfläche der Sensoreinrichtung, welche Codescheibe als Codierung einen digitalen Code sowie eine analog codierte Spur bestehend aus einer Vielzahl einzelner, in Richtung der Meßstrecke aneinander gereihter Codesegmente aufweist.

Weg- und Winkelmeßeinrichtungen werden vielfach zur automatischen Positionierung und Messung in Werkzeugmaschinen und Koordinatenmeßgeräten eingesetzt. Drehwinkelsensoren dienen beispielsweise im Kraftfahrzeugbereich zum Bestimmen der absoluten Winkelstellung des Lenkrades und werden daher auch als Lenkwinkelsensoren bezeichnet. Der Lenkwinkel wird bei Kraftfahrzeugen benötigt, um mit diesem Wert etwa ein Fahrdynamikregelsystem beaufschlagen zu können. Ein solches Fahrdynamikregelsystem erhält neben den genannten Lenkwinkelwerten weitere Meßdaten, etwa die Raddrehzahl oder die Drehung des Kraftfahrzeuges um seine Hochachse. Benötigt werden zum einen der absolute Lenkwinkeleinschlag und zum anderen die Lenkgeschwindigkeit, damit diese Werte zusammen mit den anderen erfaßten Daten durch das Fahrdynamikregelsystem ausgewertet und zum Steuern von Aktoren, beispielsweise der Bremsen und/oder des Motormanagements umgesetzt werden können.

Ein optoelektronischer Lenkwinkelsensor ist beispielsweise aus der DE 40 22 837 A1 bekannt. Der in diesem Dokument beschriebene Lenkwinkelsensor besteht aus zwei parallel und mit Abstand zueinander angeordneten Elementen - einer Lichtquelle und einem Zeilensensor - sowie einer zwischen der Lichtquelle und dem Zeilensensor angeordneten Codescheibe, die drehfest mit der Lenkspindel verbunden ist. Als Zeilensensor dient eine CCD-Sensorzeile. Als Codierung ist bei dieser Codescheibe eine sich über 360° erstreckende, als Lichtschlitz ausgebildete archimedische Spirale vorgesehen. Über die Belichtung entsprechender Wandlerelemente des Zeilensensors bei einem bestimmten Lenkeinschlag kann Aufschluß über die tatsächliche Lenkwinkelstellung gewonnen werden.

Es sind weitere optoelektronische Lenkwinkelsensoren bekannt geworden, die anstelle der beschriebenen analogen Codierung eine digitale Codierung, beispielsweise einen sogenannten Gray-Code aufweisen. Das Auflösungsvermögen eines solchen digitalen Codes ist abhängig von der Länge der kleinsten Struktur. Für einen Einsatz im Kraftfahrzeugbereich werden mit vertretbarem Aufwand hergestellte Codescheiben eingesetzt, mit deren digitaler Codierung ein Auflösungsvermögen von ca. 0,7° realisierbar ist. Im Zuge höherer Anforderungen an die eingesetzten Lenkwinkelsensorsysteme besteht die Notwendigkeit, solche mit einem höheren Auflösungsvermögens bereit zu stellen. Eine Erhöhung des Auflösungsvermögen durch eine Verfeinerung des digitalen Codes wäre zwar denkbar, jedoch aufgrund der Feinheit der notwendigen Strukturen kostenträchtig.

In DE 196 04 502 A1 ist ein optoelektronischer Lesekopf für das Lesen von digitalen Codierungen beschrieben, wobei sowohl die Lichtquelle als auch ein optischer Sensor auf der gleichen Seite einer Codescheibe angeordnet sind. Als Code dient ein Gray-Code sowie eine analoge Spur mit keilförmigen Signalflächen. Die zur Erhöhung des Auflösungsvermögens der Einrichtung dienende analoge Spur ist sägezahnartig ausgebildet und umfaßt Sprungsstellen, in denen eine eindeutige Signalzuordnung nicht möglich ist. Die Sprungstellen sind durch geneigte Signalflächen verbunden, wobei vorgesehen ist, daß in die Auswertung lediglich der mittlere Abschnitt der geneigten Signalflächen gelangt.

Die Codelänge eines Codesegmentes der analogen Spur, die sich durch die Erstreckung der analogen Spur von einer ersten Sprungstelle zur nächsten Sprungstelle erstreckt, entspricht der Schrittlänge des digitalen Gray-Codes. Da jedoch lediglich der mittlere Abschnitt eines solchen analogen Codesegmentes zur Vermeidung einer Auswertung der Sprungstellen ausgenutzt wird, entspricht die effektive Codesegmentlänge der analogen Spur der halben Schrittlänge des Gray-Codes. Um dennoch eine kontinuierliche Abtastung der analogen Signalflächen beim Gegenstand der DE 196 04 502 A1 zu erzielen, werden die analogen Signalflächen mit zwei Lichtstreifen wechselweise abgetastet. Dies jedoch stellt nicht unerhebliche Anforderungen an die eingesetzte Hardware, wie Spiegel oder dergleichen und hat Ungenauigkeiten in der Auswertung beim Umschalten von dem einen auf den anderen Lichtstreifen zur Folge. Somit ist eine durchgängige Auswertung der analogen Signalflächen bei der aus der DE 196 04 502 A1 bekannten Codierung nicht, zumindest nicht fehlerfrei möglich.

Aus der DE 40 14 479 A1 ist eine weitere optoelektronische Weg- oder Winkelmeßeinrichtung bekannt, deren Codescheibe einen digitalen Code sowie eine Analogspur aufweist. Die Analogspur ist gebildet aus linsenförmigen einzelnen, nicht miteinander verbundenen Codespursegmenten. Die in der DE 40 14 479 A1 beschriebe Einrichtung arbeitet nach Art einer Lichtschranke, wobei jeder digitalen Codespur ein Detektor zugeordnet ist. Die analoge Codespur weist zwei nebeneinanderliegende Detektoren auf. Ein Sensorarray, beispielsweise ein Zeilensensor ist bei dem Gegenstand dieses Dokumentes nicht vorgesehen. Auch wenn durch die linsenförmigen Codespursegmente der analogen Codespur innerhalb eines bestimmten Winkelbereiches eine höhere Auflösung erzielt werden kann, so ist eine gleichbleibend hohe Auflösung über die gesamte Erstreckung der Codierung nicht gegeben. Die Auflösung ist erhöht in den Übergängen, wenn einer oder beide Detektoren der analogen Spur belichtet oder nicht belichtet sind. In längeren Abschnitten ist eine Änderung nicht feststellbar, beispielsweise innerhalb eines linsenförmigen Codespursegmentes oder zwischen zwei Codespursegmenten.

Zusätzlich befindet sich eine weitere Referenzspur auf der Codescheibe, die durchgangig lichtdurchlassig ist und allein dem Zweck dient, Heiligkeitsunterschiede beim Belichten der Detektoren, die nicht auf eine Bewegung der Codescheibe zurückzuführen sind, bei der Auswertung zu berücksichtigen und zu eliminieren.

Problematisch ist bei solchen optoelektronischen Weg- oder Winkelmeßeinrichtungen regelmäßig das mechanische Spiel zwischen der beweglichen Codescheibe relativ zu den feststehenden Detektoren, welches insbesondere beim Gegenstand der DE 196 04 502 A1 eine nicht unerhebliche Bedeutung infolge der notwendigen Umschaltung des Lichtstreifens hat. Eine Korrektur derartiger mechanischer Toleranzen ist bei keinem der entgegengehaltenen Dokumente berücksichtigt. Beim Gegenstand des Dokumentes DE 40 14 479 A1 ist dies aufgrund der eingesetzten Detektoren - Photodioden - auch nicht unbedingt notwendig.

Ausgehend von diesem diskutierten Stand der Technik liegt der Erfindung daher die Aufgabe zugrunde, eine eingangs genannte gattungsgemäße Einrichtung dergestalt weiterzubilden, daß nicht nur ohne großen Aufwand das Auflösungsvermögen erhöht und insbesondere über die gesamte Meßstrecke gleichbleibend erhöht ist sondern auch gleichzeitig eine Korrektur der mechanischen Toleranzen möglich ist.

Diese Aufgabe wird erfindungsgemäß dadurch gelöst, daß die analog codierte Spur Teil einer mittensymmetrisch aufgebauten durchgängigen Referenzcodespur ist, deren aneinander gereihte Codesegmente eine sprunglose analoge Codespur definieren und die Codesegmente eine Codelänge aufweisen, die zumindest dem kleinsten Auflösungsschritt der Digitalcodierung entspricht, wobei die Ausgestaltung eines solchen Codesegmentes und das Auflösungsvermögen der Sensoreinrichtung dergestalt aufeinander abgestimmt sind, daß eine Bewegung der Codescheibe über die Mindestlänge eines Codesegmentes in wenigstens zwei definierte Schritte auflösbar ist.

Das Vorsehen einer analog codierten Spur als Teil einer mittensymmetrisch aufgebauten durchgängigen Referenzcodespur hat den Vorteil, daß mit einer einzigen Spur nicht nur eine analoge Codierung abgetastet werden kann, sondern diese Referenzcodespur ebenfalls zur impulsmittenbestimmung und zur Berücksichtigung mechanischer Toleranzen bei der Auswertung der belichteten Wandlerelemente benutzt werden kann. Die analog codierte Spur ist sprunglos und durchgängig ausgebildet, so daß über die gesamte Länge der Referenzcodespur, die sich parallel zur digitalen Codierung über die gesamte Länge erstreckt, gewährleistet ist, daß in jeder Stellung der Codescheibe zu den Wandlerelementen, beispielsweise der Sensorzeile ein gleichhohes Auflösungsvermögen realisierbar ist. Diese analoge Positionsbestimmung der Codescheibe zu der Sensoreinrichtung braucht lediglich im Umfange der kleinsten Schrittweite der Digitalcodierung möglich zu sein und kann sich entsprechend häufig wiederholen. Die analoge Codespur ist durch eine Aneinanderreihung einzelner Codesegmente in Bewegungsrichtung der Codescheibe gebildet. Das Auflösungsvermögen im Bereich eines solchen analogen Codesegmentes ist auch abhängig von dem Auflösungsvermögen der eingesetzten Sensoreinrichtung, beispielsweise einer PDA-Zeile. Die Begrenzung des Auflösungsvermögen auf einen sehr kleinen Teilbereich der erfaßbaren Gesamtstrecke wirkt sich zudem günstig auf die notwendige Breite dieser Spur aus, die infolge dessen kaum die Breite einer ansonsten eingesetzten Codescheibe erhöht.

Die aus einer analogen Spur und einer Referenzspur aufgebaute Referenzcodespur ist mittensymmetrisch aufgebaut, wobei die analoge Codierung etwa wellenförmig oder als gezackte Linie durchgängig ausgestaltet ist. Bei einer Ausbildung als gezackte Linie ist es zweckmäßig, die Scheitelpunkte der Referenzcodespur mittig zwischen den Abstand von zwei kleinsten Strukturen der digitalen Codierung zur Erhöhung der Trennschärfe der digitalen Codierung anzuordnen.

In einer zweckmäßigen Ausgestaltung entspricht die Länge eines Codesegmentes der analogen Spur der Länge der kleinsten Struktur der Digitalcodierung. Prinzipiell kann die Länge eines analogen Codesegmentes jedoch von der Schrittweite des kleinsten Auflösungsschrittes des Digitalcodes bis zu seiner Gesamterstreckung variieren.

Es kann vorgesehen sein, daß zwei derartige Referenzcodespuren vorgesehen sind, zwischen denen die digitale Codierung verläuft. Die beiden Referenzcodespuren sind dann zweckmäßigerweise um die Weite eines Auflösungsschrittes des Digitalcodes versetzt zueinander angeordnet. Auf diese Weise läßt sich eine Bewegungsrichtungbestimmung der Codescheibe ohne weiteres vornehmen.

Bevorzugt ist eine solche Codescheibe als Teil einer Lenkwinkelsensoreinrichtung eines Kraftfahrzeuges eingesetzt.

Weitere Vorteile und Ausgestaltungen der Erfindung sind Bestandteil weiterer Unteransprüche sowie der nachfolgenden Beschreibung eines Ausführungsbeispieles unter Bezugnahme auf die beigefügten Figuren.
Es zeigen:
- **Fig. 1:**: Eine Draufsicht auf eine Codescheibe für den Lenkwinkelsensor eines Kraftfahrzeuges,
- **Fig. 2:**: Einen vergrößerten Ausschnitt der Codescheibe der Figur 1 darstellend die tatsächlichen Hell-Dunkel-Verhältnisse,
- **Fig. 3a:**: Ein vergrößerter Teilbereich der Codescheibe der Figuren 1 bzw. 2 in einer ersten Position zu einem Zeilen sensor und
- **Fig. 3b:**: Ein Teilbereich der vergrößerten Darstellung der Codescheibe der Figur 3a in einer zweiten Stellung.

Eine Codescheibe 1 für einen Lenkwinkelsensor eines Kraftfahrzeuges ist als ringförmige Scheibe ausgebildet und in nicht näher dargestellter Art und Weise an die Drehbewegung der Lenkspindel gekoppelt. Die Codescheibe 1 ist von ihrer einen Seite beleuchtet; auf der gegenüberliegenden Seite der Codescheibe 1 ist ein Zeilensensor, eine PDA-Zeile 2 angeordnet, deren photosensitive Oberfläche durch auf der Codescheibe 1 enthaltene Strukturen belichtet ist.

Die Codescheibe 1 trägt einen Gray-Code 3 bestehend aus neun Spuren mit einem Meßbereich von 360°. Das Auflösungsvermögen des Gray-Codes 3 beträgt ca. 0,7°. An den Gray-Code 3 angrenzend ist eine äußere Referenzcodespur 4 und eine innere Referenzcodespur 5 angeordnet. Die Referenzcodespuren 4, 5 sind analog codiert.

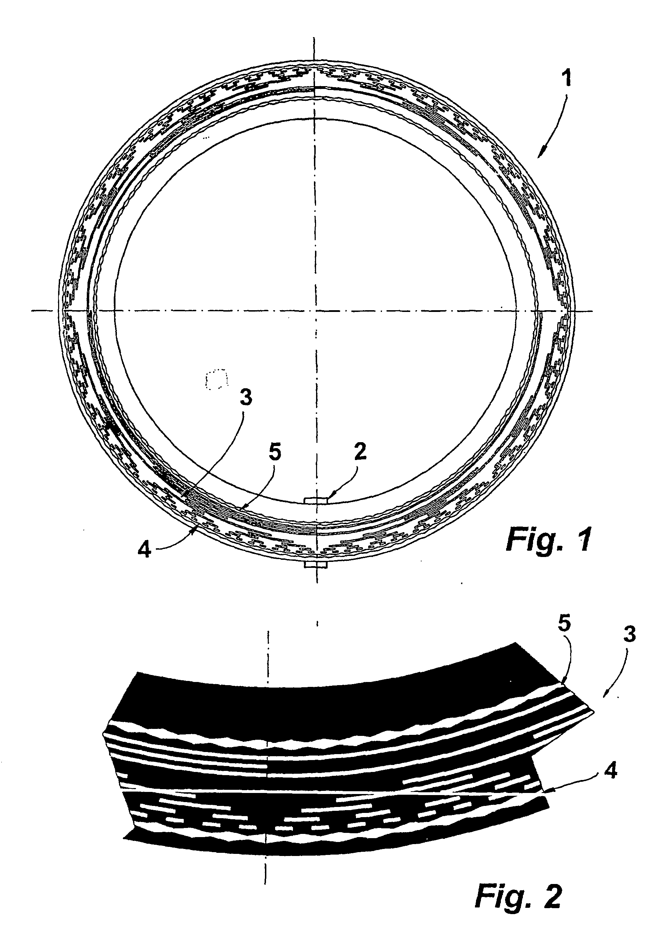

Der Übersicht halber sind die tatsächlich geschwärzten Bereiche der Codescheibe 1 in Figur 1 nicht als solche dargestellt. Zur Verdeutlichung der tatsächlichen Verhältnisse ist in Figur 2 ein Ausschnitt der Codescheibe 1 der Figur 1 in seinen tatsächlichen Verhältnissen wiedergegeben.

Aus dieser Darstellung wird deutlich, daß die photosensitive Oberfläche der PDA-Zeile 2 lediglich von den einzelnen Spuren der Codierungen 3, 4, 5 belichtet ist.

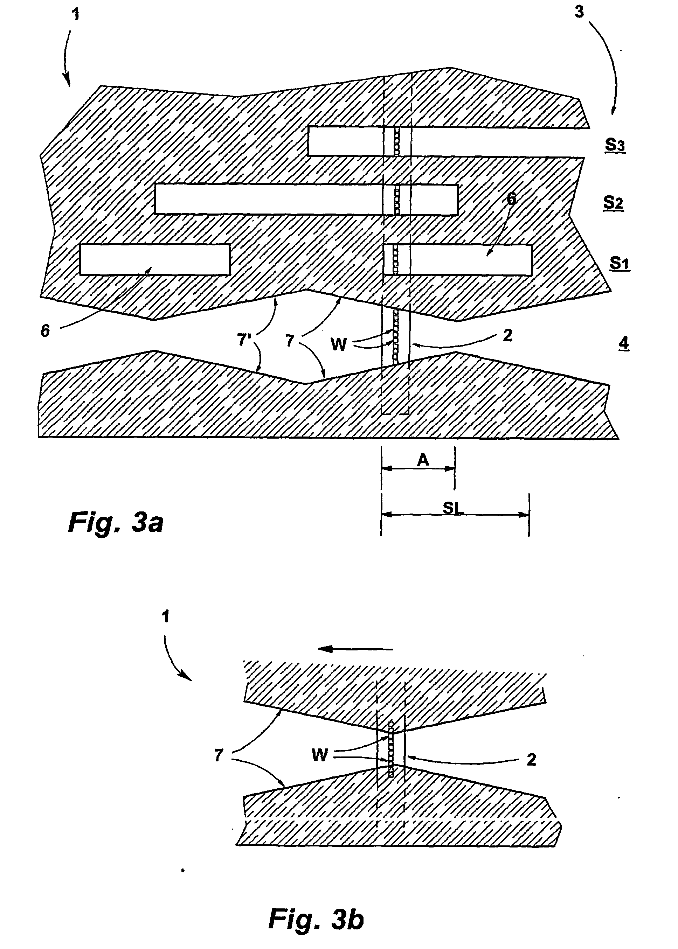

In Figur 3a sind die äußeren drei Spuren S₁, S₂, S₃ des Gray-Codes 3 sowie die angrenzende äußere Referenzcodespur 4 zur Erläuterung der Erfindung abgebildet. Schematisiert ist unterhalb der Codescheibe 1 ebenfalls die PDA-Zeile 2 mit den einzelnen optoelektronischen Wandlerelement W wiedergegeben.

Im folgenden ist die Referenzcodespur 4 beschrieben; entsprechend ist auch die Referenzcodespur 5 aufgebaut. Die Referenzcodespur 4 des dargestellten Ausführungsbeispieles ist gebildet aus einer Überlagerung einer linearen Referenzspur und einer analogen Codespur. Die Referenzspur wird benötigt, um den digitalen Code unabhängig von Änderungen der Lage der Codescheibe 1 zur ortsfesten PDA-Zeile 2 auszugleichen. Dies erfolgt durch eine Ermittlung der Spurmitte, über die die Lage der Codescheibe 1 zur PDA-Zeile 2 ermittelt und anschließend die Lage der weiteren Codespuren des Gray-Codes 3 durch den vorbekannten Abstand der einzelnen Spuren zueinander bestimmt wird. Dies dient beispielsweise zum Ausgleich von Toleranzen und gegebenenfalls einer nicht zentrischen Bewegung der Codescheibe 1.

Die eine solche gerade Referenzspur überlagernde analoge Codespur dient zum weiteren Auflösen der digitalen Schritte. Bei dem dargestellten Ausführungsbeispiel beträgt das Auflösungsvermögen des Gray-Codes ca. 0,7°. Dies entspricht der halben Weite der kleinsten digitalen Struktur 6. Ein solcher Auflösungsschritt bzw. seine Schrittweite ist in Figur 3a mit dem Bezugszeichen A gekennzeichnet; die Länge der kleinsten digitalen Struktur 6 mit dem Bezugszeichen SL. Die analoge Codierung besteht in ihrem kleinsten Element aus einem zur Bewegungsrichtung der Codescheibe 1 schrag verlaufenden Codesegment 7, dessen Länge der Länge SL der kleinsten digitalen Struktur entspricht. Dieses Codesegment 7 ist als schräg zur Bewegungsrichtung der Codescheibe 1 verlaufende Flanke ausgebildet. Zur Erstellung der analogen Codespur als kontinuierliche Codespur ist diese gebildet aus wechselweise schräg angeordneten Codesegmenten 7, 7', so daß eine wellenförmige bzw. gezackte Linie als Analogcode bereitgestellt ist, der sich über 360° erstreckt. Bei dem dargestellten Ausführungsbeispiel erstreckt sich die Referenzcodespur 4 um 360°, so daß die einzelnen Codesegmente 7, 7' nicht, wie vereinfacht in den Figuren dargestellt, eine gerade Linie bilden, sondern entsprechend dem Radius der Referenzcodespur 4 gekrümmt sind.

Die Überlagerung der zuvor beschriebenen Referenzspur mit der ebenfalls beschriebenen analogen Codespur ist dadurch bereitgestellt, daß die Referenzcodespur 4 mittensymmetrisch aufgebaut ist, damit durch diese Referenzcodespur 4 nach wie vor eine Impulsmittenbestimmung zur Spurlageerkennung durchgeführt werden kann.

Das Auflösungsvermögen der Referenzcodespur 4 in Bezug auf seinen analogen Anteil ist abhängig von der Steigung der Flanke eines Codesegmentes 7, 7' sowie von dem Auflösungsvermögen der PDA-Zeile 2. Bei der in Figur 3a gezeigten Stellung der Codescheibe 1 zu der PDA-Zeile 2 sind beispielsweise 10 Wandlerelemente W durch die Referenzcodespur 4 belichtet. Eine Bewegung der Codescheibe 1 entgegen dem Uhrzeigersinn gegenüber der PDA-Zeile 2 führt dazu, daß beispielsweise nach einer Bewegung der Codescheibe 1 um die Schrittweite eines Auflösungsschrittes A von der Referenzcodespur 4 nur noch fünf bis sechs Wandlerelemente W durch die Referenzcodespur 4 belichtet werden. Entsprechend sind innerhalb dieses Bewegungsbetrages durch Auswertung der durch die Referenzcodespur 4 belichteten Wandlerelemente W Zwischenschritte definierbar, beispielsweise ein solcher, bei dem acht Wandlerelemente W belichtet sind. Diese in den Figuren dargestellte Ausgestaltung dient lediglich der Erläuterung der Funktionsweise der Erfindung; Änderungen in der Steigung der Codesegmente 7, 7' bzw. im Auflösungvermögen des Zeilensensors 2 können eine weitere Erhöhung des Auflösungsvermögens zur Folge haben.

Bei der Codescheibe 1 befinden sich die Scheitel der analogen Codierung der Referenzcodespur 4 mittig zwischen zwei kleinsten Strukturen 6 des Gray-Codes 3, da in dieser Anordnung die Trennschärfe beim Auslesen des Gray-Codes 3 erhöht ist.

Um einen Auflösungsschritt A versetzt zu der Referenzcodespur 4 ist die innenliegende Referenzcodespur 5 angeordnet, so daß auf diese Weise nicht nur eine Informationsredundanz bezüglich der weiteren Ortsauflösung eines Auflösungsschrittes A erzielt wird, sondern auch eine Drehrichtungsbestimmung mit einem geringen Rechenaufwand realisierbar ist.

Aus der Beschreibung der Erfindung wird deutlich, daß bei der erfindungsgemäßen Codescheibe eine Erhöhung des digitalen Auflösungsvermögens durch Anordnen einer zusätzlichen analogen Codierung auf einfache Weise möglich ist. Besonders raumsparend ist der Einsatz einer in den Figuren kombinierten Referenzcodespur, da Referenzspuren ohnehin vorhanden sind und das zusätzliche Ausgestalten der Referenzspur zu einer Referenzcodespur kaum Raum in radialer Richtung benötigt, so daß die radiale Breite einer herkömmlichen Codescheibe gegenüber der erfindungsgemäßen nur unwesentlich erhöht ist. Somit ist es beim Gegenstand der beanspruchten Erfindung möglich, die zur Verfügung stehende Sensorfläche besser ausnutzen zu können. Dies ist insbesondere im Hinblick auf die Anforderungen bei Lenkwinkelsensoren, bei denen der Einbauraum im Bereich eines Lenksäulenmoduls begrenzt ist, nicht unwesentlich.

Neben eines Einsatzes als kreisrunde Codescheibe zur Erzielung einer Winkelbestimmung kann eine erfindungsgemäße Codescheibe ebenfalls für eine Längenmeßung eingesetzt werden; der Code ist in einem solchen Falle nicht kreisförmig sondern gerade verlaufend aufgebaut.

### Zusammenstellung der Bezugszeichen

- 1: Codescheibe
- 2: PDA-Zeile
- 3: Gray-Code
- 4: Referenzcodespur
- 5: Referenzcodespur
- 6: Kleinste Struktur des Gray-Codes
- 7, 7': Analoges Codesegment

- A: Auflösungsschritt des Gray-Codes
- SL: Strukturlänge
- W: Wandlerelement

## Patentansprüche

1. Optoelektronische Weg- oder Winkelmeßeinrichtung, bestehend aus einer Codescheibe (1) und einer zu dieser ortsfest angeordneten photosensitiven Sensoreinrichtung (2) mit einer Vielzahl nebeneinander in Querrichtung zur Längserstreckung der Codierung (3) angeordneter photoelektrischer Wandlerelemente (W) und einer Beleuchtungseinrichtung zum optischen Abbilden der Codierung (3) der Codescheibe (1) auf der photosensitiven Oberfläche der Sensoreinrichtung (2), welche Codescheibe (1) als Codierung einen digitalen Code (3) sowie eine analog codierte Spur bestehend aus einer Vielzahl einzelner, in Richtung der Meßstrecke aneinander gereihter, sich bezüglich ihrer Weite ändernder Codesegmente (7, 7') aufweist, und die Sensoreinrichtung (2) zum Abtasten der Weite der analog codierten Spur durch Belichten unterschiedlich vieler Wandlerelemente (W) ausgelegt ist, **dadurch gekennzeichnet, daß** die analog codierte Spur Teil einer mittensymmetrisch aufgebauten durchgängigen Referenzcodespur (4) ist, deren aneinander gereihte Codesegmente (7, 7') eine sprunglose analoge Codespur definieren und die Codesegmente (7, 7') eine Codelänge aufweisen, die zumindest dem kleinsten Auflösungsschritt (A) der Digitalcodierung (3) entspricht, wobei die Ausgestaltung eines solchen Codesegmentes (7, 7') und das Auflösungsvermögen der Sensoreinrichtung (2) dergestalt aufeinander abgestimmt sind, daß eine Bewegung der Codescheibe (1) über die Mindestlänge eines Codesegmentes (7, 7') in wenigstens zwei definierte Schritte auflösbar ist.

2. Einrichtung nacn Anspruch 1, **dadurch gekennzeichnet, daß** die Länge eines Codesegments (7, 7') der Referenzcodespur (4) der Codescheibe (1) sich über die Länge der kleinsten Struktur (6) der Digitalcodierung (3) erstreckt.

3. Einrichtung nach Anspruch 1 oder 2, **dadurch gekennzeichnet, daß** die Codesegmente (7, 7') der Referenzcodespur (4) der Codescheibe (1) winklig zur Bewegungsrichtung der Codescheibe (1) angeordnete Flanken sind.

4. Einrichtung nach Anspruch 3, **dadurch gekennzeichnet, daß** die Flanken der Codesegmente (7, 7') eine gezackte Linie ausbilden.

5. Einrichtung nach Anspruch 4, **dadurch gekennzeichnet, daß** die Scheitelpunkte der gezackt ausgebildeten Referenzcodespur (4) mittig zwischen dem Abstand von zwei kleinsten Strukturen (6) der digitalen Codierung (3) angeordnet sind.

6. Einrichtung nach Anspruch 5, **dadurch gekennzeichnet, daß** auf der Codescheibe (1) eine zweite Referenzcodespur (5) vorgesehen ist und die digitalen Codespuren (3, S₁, S₂, S₃) zwischen den beiden Referenzcodespuren (4, 5) angeordnet sind, wobei eine Referenzcodespur (5) um die Weite eines Auflösungsschrittes (A) des Digitalcodes (3) versetzt zu der anderen Referenzcodespur (4) angeordnet ist.

7. Einrichtung nach einem der Ansprüche 1 bis 6, **dadurch gekennzeichnet, daß** die Codescheibe (1) kreisrund ist und sich die Referenzcodespur (4) entsprechend über 360° erstreckt.

8. Einrichtung nach Anspruch 7, **dadurch gekennzeichnet, daß** die Codesegmente (7, 7') der Referenzcodespur (4) der Codescheibe (1) winklig zur Bewegungsrichtung der Codescheibe (1) angeordnete und entsprechend der Krümmung der Referenzcodespur (4) gekrümmte Flanken sind.

9. Einrichtung nach einem der Ansprüche 1 bis 8, **dadurch gekennzeichnet, daß** die optoelektronische Weg- oder Winkelmeßeinrichtung der Lenkwinkelsensor eines Kraftfahrzeuges zum Bestimmen der Winkelstellung des Lenkrades ist.

## Claims

1. Optoelectronic path or angle measuring device, comprising a code disk (1) and a photosensitive sensor (2), which is disposed stationary relative to said disk, with a plurality of photoelectric transducer elements (W) which are disposed adjacent to each other in the transverse direction to the longitudinal extension of the coding (3), and an illuminating device for optically imaging the coding (3) of the code disk (1) on the photosensitive surface of the sensor (2), which code disk (1) has as coding a digital code (3) as well as an analog coded track comprising a plurality of individual code segments (7, 7"), positioned in succession in the direction of the measuring distance and altering in respect of their width, and the sensor (2) is designed to scan the width of the analog coded track by illuminating varying numbers of the transducer elements (W), **characterised in that** the analog coded track forms part of a continuous reference code track (4) which is constructed with centre-to-centre symmetry and the successively positioned code segments (7, 7") of which define a continuous analog code track, and the code segments (7, 7") have a code length which corresponds at least to the smallest resolution step (A) of the digital coding (3), the embodiment of such a code segment (7, 7") and the resolution capacity of the sensor (2) being matched to one another in such a way that a movement of the code disk (1) over the minimum length of a code segment (7, 7") can be resolved into at least two defined steps.

2. Device according to claim 1, **characterised in that** the length of a code segment (7, 7") of the reference code track (4) of the code. disk (1) extends over the length of the smallest structure (6) of the digital coding (3).

3. Device according to claim 1 or 2, **characterised in that** the code segments (7, 7") of the reference code track (4) of the code disk (1) are flanks disposed at an angle to the direction of movement of the code disk (1).

4. Device according to claim 3, **characterised in that** the flanks of the code segments (7, 7") form a serrated line.

5. Device according to claim 4, **characterised in that** the vertices of the serrated reference code track (4) are disposed centrally in the distance between two smallest structures (6) of the digital coding (3) .

6. Device according to claim 5, **characterised in that** a second reference code track (5) is provided on the code disk (1) and the digital code tracks (3, S₁, S₂, S₃) are disposed between the two reference code tracks (4, 5), one reference code track (5) being disposed offset by the width of a resolution step (A) of the digital code (3) relative to the other reference code track (4).

7. Device according to one of claims 1 to 6, **characterised in that** the code disk (1) is circular and the reference code track (4) correspondingly extends over 360°.

8. Device according to claim 7, **characterised in that** the code segments (7, 7") of the reference code track (4) of the code disk (1) are flanks which are disposed at an angle to the direction of movement of the code disk (1) and are curved to correspond with the curvature of the reference code track (4).

9. Device according to one of claims 1 to 8, **characterised in that** the optoelectronic path or angle measuring device is the steering angle sensor of an automotive vehicle, for determining the angular position of the steering wheel.

## Revendications

1. Disque codé pour une unité optoélectronique servant à mesurer un déplacement ou un angle, laquelle unité comporte un disque codé avec un capteur photosensible (2), positionné de manière fixe par rapport au disque codé, avec une multitude d'éléments convertisseurs photoélectriques (W) disposés les uns à côté des autres, perpendiculairement au sens longitudinal du codage (3) et avec un dispositif d'éclairage visant à assurer une projection optique du codage du disque codé (1) sur la surface photosensible du capteur (2), lequel disque codé (1) présente, en guise d'encodage, un code digital (3) ainsi qu'une piste codée analogiquement constituée d'une multitude de segments-code (7, 7') distincts, alignés les uns contre les autres, dans le sens de la trajectoire de mesure, et lequel capteur (2) est destiné à balayer la largeur de la piste codée analogiquement par un éclairage d'une multitude d'éléments convertisseurs (W) distincts, **caractérisé en ce que** la piste codée analogiquement est une partie d'une piste-code de référence (4) continue, à structure symétrique médiane, dont les segments-code (7, 7') alignés les uns à côté des autres définissent une piste-code analogique sans transition et que les segments-code (7, 7') présentent une longueur de code correspondant au moins au pas de résolution (A) le plus petit du codage numérique (3) sachant que la conception d'un tel segment-code (7, 7') et que la résolution du dispositif capteur (2) sont adaptées l'une à l'autre de telle sorte qu'un mouvement du disque codé (1) sur une longueur minimale d'un segment-code (7, 7') soit résoluble en au moins deux pas définis.

2. Dispositif selon la revendication 1, **caractérisé en ce que** la longueur d'un segment-code (7, 7') de la piste-code de référence (4) du disque codé (1) s'étend sur la longueur de la plus petite structure (6) du codage numérique (3).

3. Dispositif selon la revendication 1 ou 2 **caractérisé en ce que** les segments-code (7, 7') de la piste-code de référence (4) du disque codé (1) sont des flancs disposés de manière à former un angle par rapport au sens de déplacement du disque codé (1).

4. Dispositif selon la revendication 3 **caractérisé en ce que** les flancs des segments-code (7, 7') forment une ligne brisée.

5. Dispositif selon la revendication 4 **caractérisé en ce que** les points culminants de la piste-code de référence (4) conçue en tant que ligne brisée sont placés au centre de l'intervalle entre les deux structures (6) les plus petites du codage numérique (3).

6. Dispositif selon la revendication 5 **caractérisé en ce qu'**il est prévu une seconde piste-code de référence (5) sur le disque codé (1) et que les pistes-code numériques (3, S₁, S₂, S₃) sont placées entre les deux pistes-code de référence (4, 5), sachant qu'une piste-code de référence (4, 5) est placée, par rapport à l'autre piste-code de référence (4), en décalage d'une longueur correspondant à celle d'un pas de résolution (A) du code numérique (3).

7. Dispositif selon l'une des revendications 1 à 6 **caractérisé en ce que** le disque codé (1) est circulaire et que la piste-code de référence (4) s'étend par conséquent sur 360°.

8. Dispositif selon la revendication 7 **caractérisé en ce que** les segments-code (7, 7') de la piste-code de référence (4) du disque codé (1) sont disposés de manière à former un angle par rapport au sens de déplacement du disque codé (1) et sont des flancs courbés en fonction de la courbure de la piste-code de référence (4).

9. Dispositif selon l'une des revendications 1 à 8 **caractérisé en ce que** le dispositif optoélectronique de mesure d'un déplacement ou d'un angle est un capteur d'angle de braquage d'un véhicule à moteur destiné à déterminer la position angulaire du volant de direction.
